# EUROPÄISCHE PATENTSCHRIFT

(11) **EP 3 426 944 B1**
(45) Veröffentlichungstag und Bekanntmachung des Hinweises auf die Patenterteilung: **29.04.2020**
(21) Anmeldenummer: 17710196.1
(22) Anmeldetag: 08.03.2017
(51) Int. Cl.: F16F 9/46

(54) **DÄMPFUNGSVERSTELLSYSTEM MIT SENKRECHTEM DICHTRING**
DAMPING ADJUSTING SYSTEM WITH PERPENDICULAR SEAL RING
SYSTÈME DE RÉGLAGE DE L'AMORTISSEMENT AVEC BAGUE D'ÉTANCHÉITÉ VERTICALE

(30) Priorität: 09.03.2016 DE 102016104338
(43) Veröffentlichungstag der Anmeldung: 16.01.2019
(73) Patentinhaber: Kendrion (Villingen) GmbH, 78048 Villingen-Schwenningen (DE)
(72) Erfinder: BERGFELD, Björn, 72336 Balingen-Endingen (DE)
(74) Vertreter: Westphal, Mussgnug & Partner Patentanwälte mbB
(86) Internationale Anmeldenummer: PCT/EP2017/055498
(87) Internationale Veröffentlichungsnummer: WO 2017/153503

(56) Entgegenhaltungen:
- EP-A2- 0 288 736
- EP-A2- 1 975 453
- DE-A1-102014 215 563
- US-A- 5 531 422
- US-A1- 2006 225 976

## Beschreibung

Die vorliegende Erfindung betrifft ein Dämpfungsverstellsystem nach dem Oberbegriff des Patentanspruchs 1, sowie einen Schwingungsdämpfer mit einer als Dämpfungsverstellsystem ausgebildeten Dämpfventileinrichtung.

Verstellbare Dämpfungssysteme oder Dämpfungsverstellsysteme sind mittlerweile in vielen Fahrzeugen verfügbar und bieten dem Autofahrer höheren Fahrkomfort und mehr Fahrsicherheit. Dazu kann das Steuergerät der Fahrwerksregelung mit Daten unter anderem von den Beschleunigungs- und Wegsensoren für jedes Rad die Dämpfkräfte in wenigen Millisekunden individuell anpassen. Auf diese Weise werden störende Anregungen der Straße möglichst von den Passagieren ferngehalten und der Dämpfer wird so angesteuert, dass die Karosseriebewegungen bestmöglichst stabilisiert werden.

Die Dämpfer weisen dabei in der Regel ein Dämpferrohr oder einen Außenzylinder auf, in welchem ein integriertes Verstellsystem in einem Dämpfungsöl hin und her beweglich ist. Das integrierte Verstellsystem, das als hin und her beweglicher Kolben in dem Außenzylinder ausgebildet ist, weist eine Pilotstufe mit einer Magnetspule und einem Anker auf, die in Abhängigkeit von dem elektrischen Stroms, der durch die Magnetspule geleitet wird, über die Bewegung des Ankers den Druck, mit dem eine Hauptstufe beaufschlagt wird, regelt. Mit Hilfe des Ankers in der Pilotstufe werden dabei Ventile in der Hauptstufe, je nach Bedarf geöffnet oder geschlossen, um dadurch den Öldruck im Dämpferrohr zu regeln und auf diese Weise eine weichere oder eine härtere Dämpfung zu erreichen. Um den Energieverbrauch des Systems zu minimieren, ist die Magnetspule so ausgelegt, dass sie im stromlosen Zustand keine Kraft auf die Pilotstufe ausübt. Während der Fahrt wird der Dämpfer überwiegend im Bereich niedriger Dämpfkräfte und damit bei geringer Bestromung betrieben, beispielsweise bei ruhiger Fahrt über eine relativ ebene Fahrbahnoberfläche. Hohe Dämpfkräfte, beispielsweise zur Stabilisierung des Aufbaus bei dynamischen Fahrmanövern oder Fahrten durch Schlaglöchern, werden nur kurzzeitig eingestellt.

In dem Dämpfungsöl können jedoch Luftbläschen eingeschlossen sein oder sich bilden, die, insbesondere, wenn sie in den Ankerraum der Pilotstufe eindringen, sich dort anhäufen und beim Ansteuern der Hauptstufe Störungen verursachen können, weil der Dämpfer senkrecht betrieben wird und nach oben hin verschlossen ist, so daß eingedrungene Luftbläschen nicht mehr aus dem Innenraum, in welchem der Anker bewegt wird, entweichen können. In dem Innenraum, in dem sich der Anker der Pilotstufe hin und her bewegt wenn er durch die Magnetspule elektromagnetisch betätigt wird, befindet sich dann das Dämpfungsöl und die Luftbläschen. Bedingt durch die unterschiedlichen Viskositäten, sowie durch unterschiedliche Druck-Temperatur- Volumeneigenschaften des Dämpfungsöls und der Luftbläschen kann dies dazu führen, dass bei gleicher und gleichdauernder Bestromung der Magnetspule der Anker eine andere Auslenkung erfährt, wenn sich Luftbläschen in dem Innenraum befinden. Dadurch ergeben sich bei gleicher Bestromung der Magnetspule unterschiedliche Ansteuerungen der Hauptstufe, welche unterschiedliche Dämpfungen im Dämpfer bewirken.

Dämpfungsverstellsysteme sind aus der DE 10 2014 215 563 A1, der EP 1 975 453 A2, der US 5 531 422 A und der US 2006/225 976 A1 bekannt, die elektromagnetisch betätigt werden, die allerdings die oben genannten Nachteile nicht beseitigen können.

Aufgabe der vorliegenden Erfindung ist es daher, ein Dämpfungsverstellsystem bereitzustellen, das diese Nachteile nicht aufweist.

Diese Aufgabe wird gelöst durch ein Dämpfungsverstellsystem nach Patentanspruch 1 sowie durch einen Schwingungsdämpfer nach Patentanspruch 15. Vorteilhafte Ausgestaltungen sind in den jeweiligen Unteransprüchen offenbart.

Das erfindungsgemäße Dämpfungsverstellsystem weist ein in einem Außengehäuse angeordnetes Führungsrohr mit einer Seitenaußenwand auf, wobei der Innenraum des Führungsrohrs von einem Bodenteil stirnseitig begrenzt ist. Weiterhin weist das Dämpfungsverstellsystem wenigstens eine zwischen dem Außengehäuse und dem Führungsrohr angeordnete Magnetspule auf, einen in dem Führungsrohr entlang einer Bewegungsachse geführten elektromagnetisch beweglichen Anker, einen Außenraum, der das Außengehäuse umgibt, sowie eine den Innenraum mit dem Außenraum verbindende Entlüftungsbohrung, die durch das Bodenteil und durch das Außengehäuse geführt ist. Die Entlüftungsbohrung weist erfindungsgemäß zwei miteinander verbundene Abschnitte auf, wobei ein erster Abschnitt durch das Bodenteil geführt ist, wobei der erste Abschnitt eine innenraumseitig am Bodenteil angeordnete erste Öffnung und eine an der Seitenaußenwand angeordnete zweite Öffnung aufweist. Die Entlüftungsbohrung weist weiterhin einen zweiten Abschnitt auf, der durch das Außengehäuse geführt ist. Zwischen dem Führungsrohr und dem Außengehäuse ist die Entlüftungsbohrung mit einer die Entlüftungsbohrung umlaufenden Dichtung abgedichtet. Auf diese Weise kann erreicht werden, dass Luftbläschen, die in den Innenraum gespült worden sind, in welchem der elektromagnetisch bewegliche Anker sich hin und her bewegt, durch die Entlüftungsbohrung in den Außenraum außerhalb des Außengehäuses transportiert werden können, ohne dass in den Zwischenraum, in welchem die Magnetspule angeordnet ist, Dämpfungsöl eindringen kann.

Erfindungsgemäß ist dabei die erste Öffnung in Richtung der Bewegungsachse weisend angeordnet und die zweite Öffnung senkrecht zur Bewegungsachse weisend angeordnet. Auf diese Weise kann unter Verwendung eines nur sehr kleinen Dichtrings, der die Entlüftungsbohrung zwischen dem Außengehäuse und dem Führungsrohr abdichtet, erreicht werden, dass kein Öl in den Zwischenraum, in welchem der Magnet angeordnet ist und in welchem auch die elektrischen Kontakte angeordnet sind, hineinleckt.

Vorteilhafterweise liegt die zweite Öffnung der zur Innenwand des Außengehäuses gerichteten Öffnung des zweiten Abschnitts frontal gegenüber, um zwischen dem Führungsrohr und dem Außengehäuse eine kürzest mögliche Verbindung zwischen dem ersten Abschnitt und dem zweiten Abschnitt der Entlüftungsbohrung herzustellen.

Der erste Abschnitt der Entlüfungsbohrung kann einen gradlinig geführten, zum Innenraum des Führungsrohrs geöffneten ersten Teilabschnitt sowie einen gradlinig geführten, zur Seitenaußenwand des Führungsrohrs geöffneten zweiten Teilabschnitt aufweisen, wobei der zweite Teilabschnitt abgewinkelt zum ersten Teilabschnitt durch das Bodenteil des Führungsrohrs verläuft. Der Winkel zwischen dem ersten Teilabschnitt und dem zweiten Teilabschnitt ist dabei vorteilhafterweise ein im Wesentlichen rechter Winkel, wobei der Begriff "im Wesentlichen rechter Winkel" bedeuten soll, dass der Winkel zwischen den beiden Teilabschnitten um bis zu zehn Grad vom rechten Winkel abweichen kann.

Der erste Teilabschnitt kann einen Teilbereich mit einem verringerten Durchmesser aufweisen, damit zwar rasch die angesammelte Luft durch diesen Teilbereich transportiert bzw. gepresst werden kann, das Dämpfungsöl jedoch auf Grund seiner höheren Viskosität nur in unbedeutenden Mengen pro Zeiteinheit durch diese Entlüftungsbohrung entweichen kann. Dadurch wird sichergestellt, daß die Entlüftungsbohrung nur einen unwesentlichen Einfluß auf die Dämpfung ausübt. Ein solcher Teilbereich könnte natürlich auch oder alternativ im zweiten Teilabschnitt angeordnet sein. Der Durchmesser in dem Teilbereich mit dem verringerten Durchmesser liegt vorzugsweise zwischen 0,2 mm und 0,3 mm, wobei er besonders bevorzugt etwa 0,25 mm beträgt.

Vorteilhafterweise umschließt das Außengehäuse zumindest einen Teil der Seitenaußenwand des Führungsrohrs formschlüssig. Dadurch kann eine stabile und ortsfeste Lagerung des Führungsrohrs in dem Außengehäuse erreicht werden. Der zweite Teilabschnitt der Entlüftungsbohrung ist vorzugsweise im Wesentlichen senkrecht zur Bewegungsachse des Ankers durch das Bodenteil geführt. Bevorzugt ist auch die Entlüftungsbohrung im Wesentlichen senkrecht zur Bewegungsachse durch das Außengehäuse geführt.

Die Dichtung, mit welcher die Entlüftungsbohrung zwischen dem Führungsrohr und dem Außengehäuse abgedichtet ist, ist vorzugsweise eine O-Ring-Dichtung, besonders vorzugsweise jedoch eine X-Ring-Dichtung. Eine X-Ring-Dichtung, die auch Quadring-Dichtung genannt wird, beschreibt ein Dichtungsprofil, dessen in einem Quadrat liegende Geometrie acht Kontaktzonen erzeugt. Auf diese Weise ist, im Gegensatz zu einer O-Ring-Dichtung, welche in einem Quadrat nur vier Kontaktzonen erzeugen kann, die Quadring-Dichtung, insbesondere auch, weil die Dichtnaht zwischen den Erhebungen liegt, eine sicherere Abdichtung. Außerdem hat die Quadring-Dichtung eine höhere Stabilität gegen Verkanten oder Verdrehen als eine O-Ring-Dichtung.

In einer besonders bevorzugten Ausführungsform weist das Außengehäuse eine in Richtung auf die Bewegungsachse rohrförmig ausgebildete Aufnahmeöffnung zur Aufnahme des Führungsrohrs auf, deren Innenfläche eine eben ausgebildete Teilfläche aufweist, auf welcher die nach innen gerichtete Öffnung des zweiten Abschnitts ausgebildet ist. Die Dichtung kann dabei in einer ringförmigen Nut an dem Außengehäuse und/oder an dem Führungsrohr um die Entlüftungsbohrung herum aufgenommen sein. Dadurch, dass die Dichtung ringförmig auf einer ebenen Fläche um die Entlüftungsbohrung herum angeordnet wird, kann eine besonders sichere und verkantungsfreie Abdichtung zum Zwischenraum erreicht werden.

Das Führungsrohr ist vorzugsweise ein Polrohr und die wenigstens eine Magnetspule ist vorzugsweise um das Führungsrohr herumgewickelt.

Der Anker kann eine Rückholfeder aufweisen, die sich in dem Führungsrohr, vorzugsweise an einer den Innenraum begrenzenden, dem Bodenteil gegenüberliegend angeordneten Fläche abstützt, damit im unbestromten Zustand der Anker immer wieder in die gleiche Ausgangsposition zurückkehrt.

Der Anker ist vorzugsweise als Hohlrohr ausgebildet. Er weist vorzugsweise eine Durchbohrung auf, durch welche das Dämpferöl, je nach Bewegungsrichtung des Ankers entweder in den Innenraum des Führungsrohrs strömen kann oder aus dem Innenraum des Führungsrohrs herausströmen kann. Der Außenraum ist ebenfalls mit einem flüssigen Dämpfungsmedium, vorzugsweise mit einem Dämpfungsöl, gefüllt.

Der erfindungsgemäße Schwingungsdämpfer weist somit ein Dämpferrohr auf sowie eine als Dämpfungsverstellsystem ausgebildete Dämpfventileinrichtung, wobei der Außenraum von dem vorzugsweise als Außenzylinder ausgebildeten Dämpferrohr begrenzt ist und das Außengehäuse axial in dem Dämpferrohr entlang der Bewegungsachse hin und her beweglich geführt ist.

Mit dem beschriebenen Aufbau, bei welchem ein Dichtungsring seitlich zwischen dem Führungsrohr und dem Außengehäuse angeordnet ist, um den Zwischenraum, in welchem sich der Elektromagnet befindet, abzudichten, können einerseits gegenüber einem Aufbau, bei welchem die Entlüftungsbohrung nur parallel zur Bewegungsachse des elektromagnetisch beweglichen Ankers geführt wird, zusätzliche Bauteile eingespart werden. Dadurch vereinfacht sich der Aufbau des Dämpfungsverstellsystems und damit auch der Aufbau des Schwingungsdämpfers.

Das erfindungsgemäße Dämpfungsverstellsystem wird nachfolgend anhand eines konkreten Ausführungsbeispiele näher erläutert, ohne jedoch auf dieses Ausführungsbeispiel beschränkt zu sein. Es zeigen:
- Fig. 1: ein Dämpfungsverstellsytem in einem Schwingungsdämpfer im Querschnitt entlang der Bewegungsachse des Ankers,
- Fig. 2: einen Ausschnitt aus dem Dämpfungsverstellsystem nach Figur 1 mit der erfindungsgemäßen Entlüftungsbohrung,
- Fig. 3: eine umlaufende X-Ring-Dichtung im Querschnitt,
- Fig. 4: das Dämpfungsverstellsystem von Figur 1 im Querschnitt entlang der Bewegungsachse senkrecht zur Querschnittsdarstellung in Figur 1,
- Fig. 5: das Dämpfungsverstellsystem von Figur 1 im Querschnitt A-A senkrecht zur Bewegungsachse des Ankers.

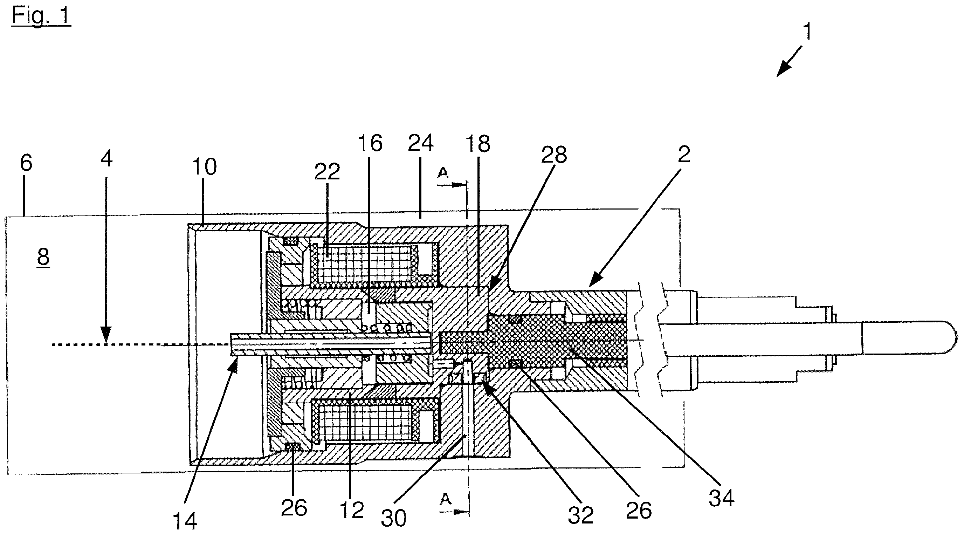

Figur 1 zeigt einen Schwingungsdämpfer 1, mit einem Dämpfungsverstellsystem 2, welches entlang einer Bewegungsachse 4 hin und her beweglich in einem Dämpferrohr 6, welches als Außenzylinder ausgebildet ist, geführt wird. In dem Außenzylinder 6 befindet sich ein Dämpfungsmedium 8 in Form eines Dämpfungsöls. Das Dämpfungsverstellsystem 2 weist ein Außengehäuse 10 auf, ein in dem Außengehäuse 10 angeordnetes Führungsrohr 12, welches als Polrohr ausgebildet ist, sowie einen in dem Polrohr 12 beweglich entlang der Bewegungsachse 4 geführten Anker 14. Der Anker 14 ist in einem Innenraum 16 des Polrohrs 12 zwischen einem Bodenteil 18 des Polrohrs 12 und einer Abstützfläche 20 hin- und her beweglich geführt.

In dem Zwischenraum zwischen dem Außengehäuse 10 und dem Polrohr 12 ist eine Magnetspule 22 angeordnet, die in der Lage ist, den Anker 14 elektromagnetisch zu betätigen, wenn sie bestromt wird. Zwischen dem Außengehäuse 10 und dem Dämpferrohr 6 befindet sich ein Außenraum 24, der, ebenso wie der Innenraum 16 mit Dämpfungsöl 8 gefüllt ist. Magnetraumdichtungen 26 dichten den Zwischenraum, in welchem sich die Magnetspule 22 befindet, gegenüber dem mit Dämpfungsöl 8 gefüllten Außenraum 24 und gegenüber dem Innenraum 16 ab.

Das Bodenteil 18 des Führungsrohrs 12 ist in einer Aufnahmeöffnung 28 des Außengehäuses 10 aufgenommen. Eine Entlüftungsbohrung 30 verbindet den Außenraum 24 mit dem Innenraum 16. Zwischen dem Führungsrohr 12 und dem Außengehäuse 10 ist eine umlaufende Dichtung 32 angeordnet, die die Entlüftungsbohrung 30 umgibt und die Entlüftungsbohrung 30 gegenüber dem Zwischenraum, in welchem die Magnetspule 22 angeordnet ist, abdichtet, sodass kein Medium, welches durch die Entlüftungsbohrung 30 vom Innenraum 16 in den Außenraum 24 oder vom Außenraum 24 in den Innenraum 16 strömt, in den Zwischenraum gelangen kann. Ein elektrisches Anschlussstück 34, welches im Außengehäuse 10 angeordnet ist, versorgt die Magnetspule 22 mit elektrischem Strom.

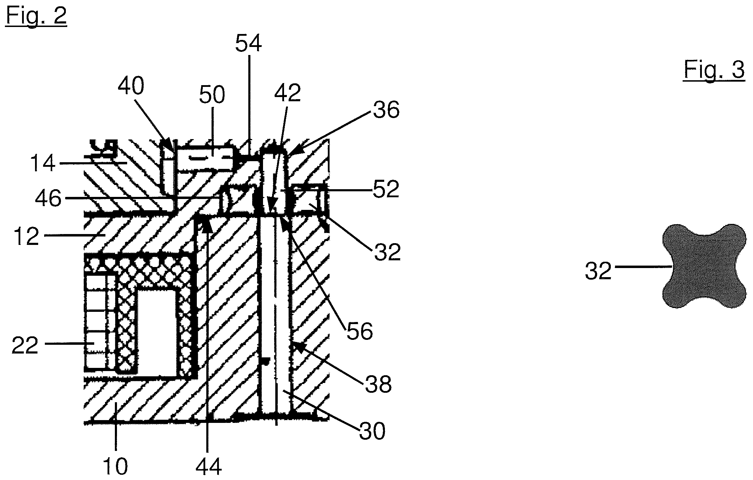

Figur 2 zeigt den Teil des Dämpfungsverstellsystems 2 mit der Entlüftungsbohrung 30 in vergrößerter Darstellung. Die Entlüftungsbohrung 30 weist einen ersten Abschnitt 36 und einen zweiten Abschnitt 38 auf. Der erste Abschnitt 36 der Entlüftungsbohrung 30 erstreckt sich zwischen einer ersten Öffnung 40, die am Bodenteil 18 des Führungsrohrs 12 angeordnet ist, bis zu einer zweiten Öffnung 42, die an einer Seitenaußenwand 44 des Führungsrohrs 12 angeordnet ist. Eine in dem Bodenteil 18 um die Entlüftungsbohrung 30 herum angeordnete ringförmige Nut 46 nimmt die vorliegend als X-Ring ausgebildete umlaufende Dichtung 32 auf, deren Querschnitt in Figur 3 dargestellt ist. Mit dieser Dichtung 32 wird der Zwischenraum, in welchem sich die Magnetspule 22 befindet, zur Entlüftungsbohrung 30 hin abgedichtet. Die umlaufende Dichtung 32 sitzt sowohl auf dem Außengehäuse 10, als auch auf der Seitenaußenwand 44 des Bodenteils 18 des Führungsrohrs 12 auf. Die umlaufende Dichtung 32 sitzt dabei auf einer eben ausgebildeten Teilfläche 48 des Außengehäuses 10 auf.

Der erste Abschnitt 36 der Entlüftungsbohrung 30 weist einen ersten Teilabschnitt 50 und einen zweiten Teilabschnitt 52 auf. Der erste Teilabschnitt 50 und der zweite Teilabschnitt 52 sind rechtwinklig zueinander angeordnet und über einen Teilbereich 54 des ersten Teilabschnitts 50, welcher einen gegenüber dem ersten Teilabschnitt 50 verringerten Innendurchmesser aufweist, vorliegend z. B. 0,25 mm, mit dem zweiten Teilabschnitt 52 verbunden. Der zweite Abschnitt 38 der Entlüftungsbohrung 30 ist über die vom Außenraum 24 weg gerichtete Öffnung 56 des Außengehäuses 10 mit dem zweiten Teilabschnitt 52 des ersten Abschnitts 36 der Entlüftungsbohrung 30 durchgehend verbunden.

Bilden sich nun beispielsweise im Innenraum 16 Luftbläschen, so können diese durch die Öffnung 40 im Bodenteil 18 über den ersten Teilabschnitt 50 und den verengt ausgebildeten Teilbereich 54 des ersten Abschnitts 36 in den zweiten Teilabschnitt 52 des ersten Abschnitts 36 gelangen, durch die umlaufende Dichtung 32 und die zweite Öffnung 42 in der Seitenaußenwand 44 des Bodenteils 18 über die Öffnung 56 im Außengehäuse 10 in den zweiten Abschnitt 38 der Entlüftungsbohrung 30 gelangen und von dort aus in den Außenraum 24 transportiert werden.

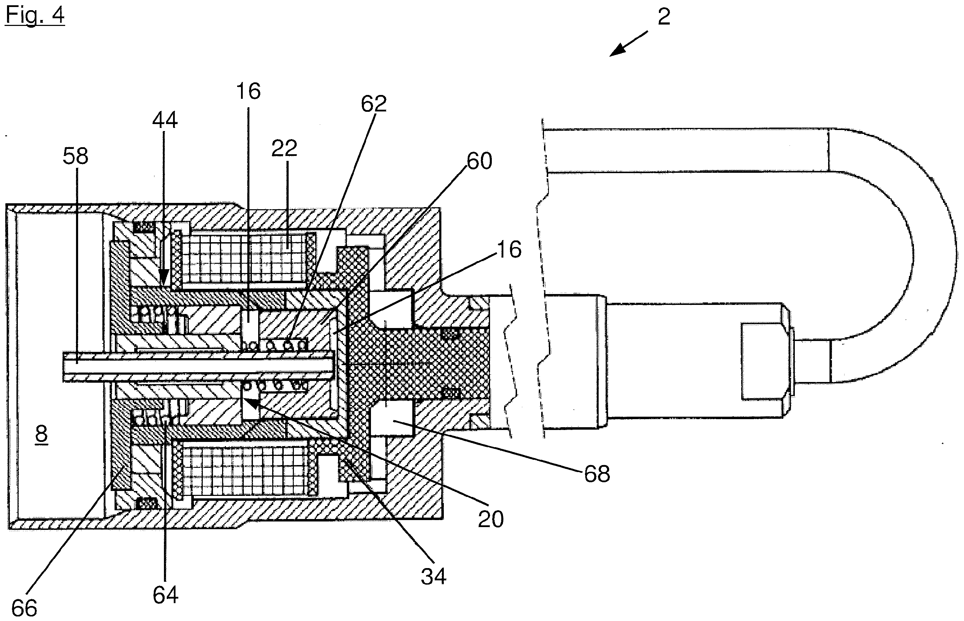

Figur 4 zeigt das Dämpfungsverstellsystem 2 entlang der Bewegungsachse 4 in einem gegenüber der Schnittdarstellung von Figur 1 um 90 Grad um die Bewegungsachse 4 gedrehten Schnitt. Wie Figur 4 zeigt, ist das elektrische Anschlussstück 34 elektrisch mit der Magnetspule 22 verbunden. Der im Innenraum 16 hin und her bewegliche Anker 14 besteht aus einem Konstantkraftsteller 58, der als hohler Stößel ausgebildet ist, sowie einem damit verbundenen Stempel 60. Der hohle Stößel 58 erstreckt sich durch den Stempel 60 hindurch und ist zum Innenraum 16 hin geöffnet, so daß Dämpfungsöl problemlos zwischen dem Innenraum 16 und dem Außenraum 24 durch den Stößel 58 hindurch strömen kann.

Zwischen dem Stempel 60 und der Abstützfläche 20 stützt sich eine Rückholfeder 62 ab, die den von der Magnetspule 22 elektromagnetisch ausgelenkten Anker 14 wieder zurück in seine Ausgangsposition treibt, wenn die Magnetspule 22 nicht mehr bestromt ist. Eine an einer weiteren Feder 64 befestige Failsafe-Scheibe 66 dient als magnetischer Schalter und sorgt dafür, dass eine Auslenkung des Ankers 14 erst ab einer bestimmten an die Magnetspule 22 angelegten Stromstärke erfolgen kann.

Durch den hohlen Konstantkraftsteller 58 kann Dämpfungsöl 8 zwischen dem Außenraum 24 und dem Innenraum 16 fließen. Der Zwischenraum, in welchem sich die Magnetspule 22 befindet, bleibt bei dieser erfindungsgemäßen Anordnung hingegen frei von Dämpfungsöl. Das Gleiche gilt für das elektrische Anschlussstück 34, welches ebenfalls frei von Dämpfungsöl bleibt.

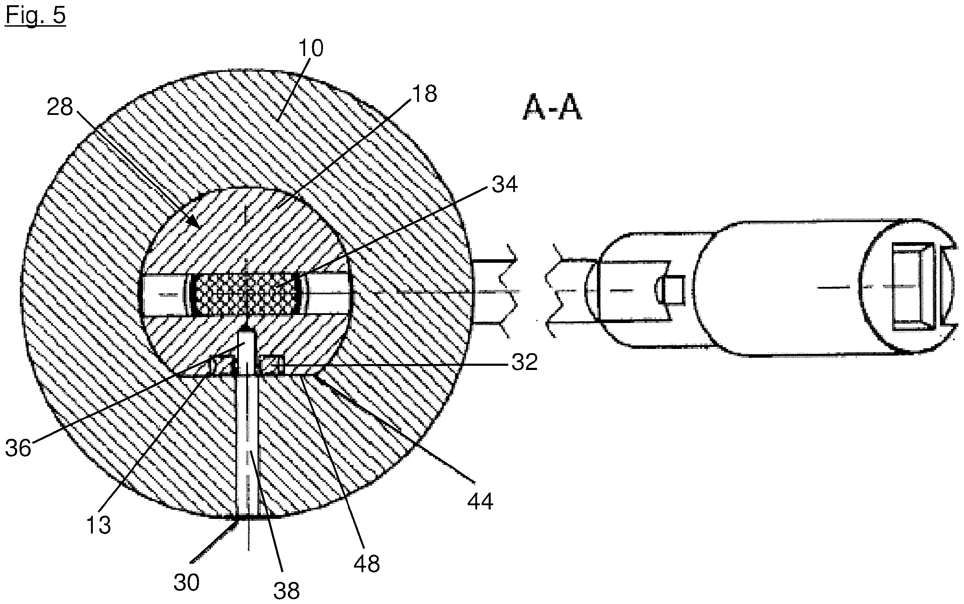

Figur 5 zeigt einen Schnitt durch das Dämpfungsverstellsystem 2 entlang der Schnittlinie A-A. Das Bodenteil 18 des Führungsrohrs 12 ist in der Aufnahmeöffnung 28 des Außengehäuses 10 aufgenommen. Das Außengehäuse 10 weist eine eben ausgebildete Teilfläche 48 auf, auf welcher der umlaufende Dichtring 32 sitzt. Die Seitenaußenwand 44 des Bodenteils 18 des Führungsrohrs 12 ist insoweit im Wesentlichen formschlüssig in der Aufnahmeöffnung 28 aufgenommen. Die als X-Ring-Dichtung ausgebildete umlaufende Dichtung 32 ist in der ringförmigen Nut 46 des Bodenteils 18 des Führungsrohrs 12 aufgenommen und dichtet die Entlüftungsbohrung 30 gegen dem Zwischenraum 68, in dem die Magnetspule 22 angeordnet ist, ab. Dadurch, dass der X-Ring 32 auf einer eben ausgebildeten Teilfläche 48 sitzt, wird eine besonders dichte und besonders zuverlässige Dichtung gegenüber dem Zwischenraum 68 erreicht. Ein weiterer Vorteil der X-Ringdichtung ist, dass sie sich nicht dreht, wenn beispielsweise das Führungsrohr 12 in die Aufnahmeöffnung 28 des Außengehäuses 10 gesteckt wird.

Die Erfindung wurde anhand eines bevorzugten Ausführungsbeispiels erläutert, ohne auf dieses Ausführungsbeispiel beschränkt zu sein. Merkmale des Ausführungsbeispiels sind frei mit funktionell gleichwirkenden Merkmalen austauschbar, sofern der Erfindungsgedanke dabei erhalten bleibt. So ist es beispielsweise auch möglich anstatt eines X-Rings einen O-Ring zu verwenden, oder auch beispielsweise einen nicht rechten Winkel zwischen dem ersten Teilabschnitt 50 und dem zweiten Teilabschnitt 52 des ersten Abschnitts 36 der Entlüftungsbohrung 30 vorzusehen.

Das in den Zeichnungen dargestellte Dämpfungsverstellsystem zeigt nur die für diese Erfindung wesentlichen Teile eines Dämpfungsverstellsystems. Dies ist vorliegend die Pilotstufe mit der Magnetspule dem Anker und der Entlüftungsbohrung. Die mit dem Anker betätigbaren Ventile, mit denen letztlich die Dämpfungswirkung des Schwingungsdämpfers eingestellt wird, sind in der vorliegenden Erfindung nicht dargestellt.

### Bezugszeichenliste

- 1: Schwingungsdämpfer
- 2: Dämpfungsverstellsystem
- 4: Bewegungsachse
- 6: Dämpferrohr, Außenzylinder
- 8: Dämpfungsmedium
- 10: Außengehäuse
- 12: Führungsrohr, Polrohr
- 14: Anker
- 16: Innenraum
- 18: Bodenteil
- 20: Abstützfläche
- 22: Magnetspule
- 24: Außenraum
- 26: Magnetraumdichtung
- 28: Aufnahmeöffnung
- 30: Entlüftungsbohrung
- 32: umlaufende Dichtung
- 34: elektrisches Anschlussstück
- 36: erster Abschnitt
- 38: zweiter Abschnitt
- 40: erste Öffnung
- 42: zweite Öffnung
- 44: Seitenaußenwand
- 46: ringförmige Nut
- 48: eben ausgebildete Teilfläche
- 50: erster Teilabschnitt
- 52: zweiter Teilabschnitt
- 54: Teilbereich
- 56: Öffnung
- 58: Konstantkraftsteller, Stößel
- 60: Stempel
- 62: Rückholfeder
- 64: weitere Feder
- 66: Failsafescheibe
- 68: Zwischenraum

## Patentansprüche

1. Dämpfungsverstellsystem (2), aufweisend
- ein in einem Außengehäuse (10) angeordnetes Führungsrohr (12) mit einer Seitenaußenwand (44), dessen Innenraum (16) von einem Bodenteil (18) stirnseitig begrenzt ist,
- wenigstens eine zwischen dem Außengehäuse (10) und dem Führungsrohr (12) angeordnete Magnetspule (22),
- einen im Führungsrohr (12) entlang einer Bewegungsachse (4) geführten, elektromagnetisch beweglichen Anker (14),
- einen Außenraum (24), der das Außengehäuse (10) umgibt,
- sowie eine den Innenraum (16) mit dem Außenraum (24) verbindende Entlüftungsbohrung (30), die durch das Bodenteil (18) und das Außengehäuse (10) geführt ist, wobei
- die Entlüftungsbohrung (30) zwei miteinander verbundene Abschnitte (36, 38) aufweist,
- ein erster Abschnitt (36) durch das Bodenteil (18) geführt ist, wobei der erste Abschnitt (36) eine innenraumseitig am Bodenteil (18) angeordnete erste Öffnung (40) und eine an der Seitenaußenwand (44) angeordnete zweite Öffnung (42) aufweist,
- ein zweiter Abschnitt (38) durch das Außengehäuse (10) geführt ist, und
- die Entlüftungsbohrung (30) zwischen dem Führungsrohr (12) und dem Außengehäuse (10) mit einer die Entlüftungsbohrung (30) umlaufenden Dichtung (32) abgedichtet ist,
**dadurch gekennzeichnet, dass**
die erste Öffnung (40) in Richtung der Bewegungsachse (4) weisend angeordnet ist und die zweite Öffnung (42) senkrecht zur Bewegungsachse (4) weisend angeordnet ist.

2. Dämpfungsverstellsystem (2) nach Anspruch 1,
**dadurch gekennzeichnet, dass**
die zweite Öffnung (42) der zur Innenwand des Außengehäuses (10) gerichteten Öffnung (56) des zweiten Abschnitts (38) frontal gegenüberliegt.

3. Dämpfungsverstellsystem (2) nach Anspruch 1,
**dadurch gekennzeichnet, dass**
der erste Abschnitt (36) einen geradlinig geführten, zum Innenraum (16) des Führungsrohrs (12) geöffneten ersten Teilabschnitt (50) und einen geradlinig geführten, zur Seitenaußenwand (44) des Führungsrohrs (12) geöffneten zweiten Teilabschnitt (52) aufweist, der abgewinkelt zum ersten Teilabschnitt (50) durch das Bodenteil (18) des Führungsrohrs (12) verläuft.

4. Dämpfungsverstellsystem (2) nach Anspruch 3, **dadurch gekennzeichnet, dass**
der Winkel zwischen dem ersten Teilabschnitt (50) und dem zweiten Teilabschnitt (52) ein im Wesentlichen rechter Winkel ist.

5. Dämpfungsverstellsystem (2) nach einem der Ansprüche 3 oder 4, **dadurch gekennzeichnet, dass**
der erste Teilabschnitt (50) und/oder der zweite Teilabschnitt (52) einen Teilbereich (54) mit einem verringerten Durchmesser aufweist, wobei der Durchmesser in dem Teilbereich (54) vorzugsweise zwischen 0,2 mm und 0,3 mm beträgt.

6. Dämpfungsverstellsystem (2) nach einem der vorigen Ansprüche,
**dadurch gekennzeichnet, dass**
das Außengehäuse (10) zumindest einen Teil der Seitenaußenwand (44) des Führungsrohrs (12) formschlüssig umschließt.

7. Dämpfungsverstellsystem (2) nach einem der Ansprüche 3 bis 5, **dadurch gekennzeichnet, dass**
der zweite Teilabschnitt (52) im Wesentlichen senkrecht zur Bewegungsachse (4) des Ankers (14) durch das Bodenteil (18) geführt ist.

8. Dämpfungsverstellsystem (2) nach einem der vorigen Ansprüche,
**dadurch gekennzeichnet, dass**
die Entlüftungsbohrung (30) im Wesentlichen senkrecht zur Bewegungsachse (4) durch das Außengehäuse (10) geführt ist.

9. Dämpfungsverstellsystem (2) nach einem der vorigen Ansprüche,
**dadurch gekennzeichnet, dass**
die Dichtung (32) eine O-Ring Dichtung oder eine X-Ring-Dichtung ist.

10. Dämpfungsverstellsystem (2) nach einem der vorigen Ansprüche,
**dadurch gekennzeichnet, dass**
das Außengehäuse (10) eine in Richtung auf die Bewegungsachse (4) rohrförmig ausgebildete Aufnahmeöffnung (28) zur Aufnahme des Führungsrohrs (12) aufweist, deren Innenfläche (16) eine eben ausgebildete Teilfläche (48) aufweist, auf welcher die zum Führungsrohr (12) gerichtete Öffnung (56) des zweiten Abschnitts (38) ausgebildet ist.

11. Dämpfungsverstellsystem (2) nach einem der vorigen Ansprüche,
**dadurch gekennzeichnet, dass**
die Dichtung (32) in einer ringförmigen Nut (46) an dem Außengehäuse (10) und/oder an dem Führungsrohr (12) um die Entlüftungsbohrung (30) herum aufgenommen ist.

12. Dämpfungsverstellsystem (2) nach einem der vorigen Ansprüche,
**dadurch gekennzeichnet, dass**
das Führungsrohr (12) ein Polrohr ist und die wenigstens eine Magnetspule (22) vorzugsweise um das Führungsrohr (12) herum gewickelt ist.

13. Dämpfungsverstellsystem (2) nach einem der vorigen Ansprüche,
**dadurch gekennzeichnet, dass**
der Anker (14) eine Rückholfeder (62) aufweist, die sich in dem Führungsrohr (12), vorzugsweise an einer den Innenraum (16) begrenzenden, dem Bodenteil (18) gegenüberliegend angeordneten Fläche (20), abstützt.

14. Dämpfungsverstellsystem (2) nach einem der vorigen Ansprüche,
**dadurch gekennzeichnet, dass**
der Außenraum (24) mit einem flüssigen Dämpfungsmedium (8), vorzugsweise mit einem Dämpfungsöl gefüllt ist.

15. Schwingungsdämpfer (2), aufweisend ein Dämpferrohr (6), sowie eine als Dämpfungsverstellsystem (2) nach einem der vorigen Ansprüche ausgebildete Dämpfventileinrichtung,
**dadurch gekennzeichnet, dass**
der Außenraum (24) von dem, vorzugsweise als Außenzylinder ausgebildeten, Dämpferrohr (6) begrenzt ist, und das Außengehäuse (10) axial in dem Dämpferrohr (6) entlang der Bewegungsachse (4) hin- und her beweglich geführt ist.

## Claims

1. Damping adjusting system (2), comprising
- a guide tube (12) which is arranged in an outer housing (10) and has a lateral outer wall (44), the inner chamber (16) of which is delimited on an end face by a base part (18),
- at least one magnetic coil (22) arranged between the outer housing (10) and the guide tube (12),
- an electromagnetically movable armature (14) which is guided in the guide tube (12) along a movement axis (4),
- an outer chamber (24) which surrounds the outer housing (10),
- and a ventilation hole (30), which connects the inner chamber (16) to the outer chamber (24) and is led through the base part (18) and the outer housing (10), wherein the ventilation hole (30) has two sections (36, 38) which are connected to one another, wherein
- a first section (36) is led through the base part (18), wherein the first section (36) has a first opening (40) arranged on an inner chamber side on the base part (18) and has a second opening (42) arranged on the lateral outer wall (44),
- a second section (38) is led through the outer housing (10),
- the ventilation hole (30) between the guide tube (12) and the outer housing (10) is sealed by a seal (32) running circumferentially around the ventilation hole (30),
**characterised in that** the first opening (40) is arranged facing in the direction of the movement axis (4) and the second opening (42) is arranged facing perpendicular to the movement axis (4).

2. Damping adjusting system (2) according to claim 1, **characterised in that** the second opening (42) is located frontally opposite the opening (56) of the second section (38) directed towards the inner wall of the outer housing (10).

3. Damping adjusting system (2) according to claim 1, **characterised in that** the first section (36) has a first part-section (50), which is led in a straight line and is open towards the inner chamber (16) of the guide tube (12), and a second part-section (52), which is led in a straight line and is open towards the lateral outer wall (44) of the guide tube (12) and extends at an angle to the first part-section (50) through the base part (18) of the guide tube (12).

4. Damping adjusting system (2) according to claim 3, **characterised in that** the angle between the first part-section (50) and the second part-section (52) is a substantially right angle.

5. Damping adjusting system (2) according to one of claims 3 or 4, **characterised in that** the first part-section (50) and/or the second part-section (52) has/have a part-region (54) with a reduced diameter, wherein the diameter in the part-region (54) is between 0.2 mm and 0.3 mm.

6. Damping adjusting system (2) according to one of the preceding claims, **characterised in that** the outer housing (10) surrounds at least a part of the lateral outer wall (44) of the guide tube (12) in a form-fitting manner.

7. Damping adjusting system (2) according to one of claims 3 to 5, **characterised in that** the second part-section (52) is led through the base part (18) substantially perpendicularly to the movement axis (4) of the armature (14).

8. The damping adjusting system (2) according to one of the preceding claims, **characterised in that** the ventilation hole (30) is led through the outer housing (10) substantially perpendicular to the movement axis (4).

9. Damping adjusting system (2) according to one of the preceding claims, **characterised in that** the seal (32) is an O-ring seal or an X-ring seal.

10. Damping adjusting system (2) according to one of the preceding claims, **characterised in that** the outer housing (10) has a tubular receiving opening (28) in the direction towards the movement axis (4) to receive the guide tube (12), the inner surface (16) of the opening having a planar part-surface (48), on which the opening (56) of the second section (38) directed towards the guide tube (12) is formed.

11. Damping adjusting system (2) according to one of the preceding claims, **characterised in that** the seal (32) is received in an annular groove (46) on the outer housing (10) and/or on the guide tube (12) around the ventilation hole (30).

12. Damping adjusting system (2) according to one of the preceding claims, **characterised in that** the guide tube (12) is a pole tube and the at least one magnetic coil (22) is preferably wound around the guide tube (12).

13. Damping adjusting system (2) according to one of the preceding claims, **characterised in that** the armature (14) has a return spring (62), which is supported in the guide tube (12), preferably on a surface (20) which delimits the inner chamber (16) and is arranged opposite the base part (18).

14. Damping adjusting system (2) according to one of the preceding claims, **characterised in that** the outer chamber (24) is filled with a liquid damping medium (8), preferably with a damping oil.

15. Vibration damper (2) having a damper tube (6), and a damping valve device designed as a damping adjusting system (2) according to one of the preceding claims, **characterised in that** the outer chamber (24) is delimited by the damper tube (6) which is preferably formed as an outer cylinder, and the outer housing (10) is guided axially in the damper tube (6) along the movement axis (4) so as to be movable to and fro.

## Revendications

1. Système de réglage d'amortissement (2) comprenant :
- un tube de guidage (12) installé dans un boîtier externe (10) ayant une paroi latérale externe (44) dont le volume interne (16) est limité côté frontal par un élément de fond (18),
- au moins une bobine magnétique (22) installée entre le boîtier externe (10) et le tube de guidage (12),
- un induit électromagnétique mobile (14) guidé dans le tube de guidage (12) le long d'un axe de déplacement (4),
- un volume externe (24) qui entoure le boîtier externe (10), et
- un perçage de ventilation (30) reliant le volume interne (16) et le volume externe (24), et qui passe au travers de l'élément de fond (18) et du boîtier interne (10),
dans lequel :
- le perçage de ventilation (30) comporte deux segments (36, 38) reliés l'un à l'autre,
- un premier segment (36) passe au travers de l'élément de fond (18), ce premier segment (36) comprenant une première ouverture (40) située côté volume interne sur l'élément de fond (18), et une seconde ouverture (42) située sur la paroi latérale externe (44),
- un second segment (38) passe au travers du boîtier externe (10), et
- l'étanchéité du perçage de ventilation (30) entre le tube de guidage (12) et le boîtier externe (10) est assurée par un joint d'étanchéité (32) entourant le perçage de ventilation (30),
**caractérisé en ce que**
- la première ouverture (40) est dirigée vers l'axe de déplacement (4) et la seconde couverture (42) est dirigée perpendiculairement à l'axe de déplacement (4).

2. Système de réglage d'amortissement (2) conforme à la revendication 1,
**caractérisé en ce que**
la seconde ouverture (42) fait frontalement face à l'ouverture (56) du second segment (38) orientée vers la paroi interne du boîtier externe (10).

3. Système de réglage d'amortissement (2) conforme à la revendication 1,
**caractérisé en ce que**
le premier segment (36) comporte un premier segment partiel (50) s'étendant linéairement ouvert vers le volume interne (16) du tube de guidage (12) et un second segment partiel (52) s'étendant linéairement ouvert vers la paroi latérale externe (44) du tube de guidage (12), qui s'étend angulairement par rapport au premier segment partiel (50) au travers de l'élément de fond (18) du tube de guidage (12).

4. Système de réglage d'amortissement (2) conforme à la revendication 3,
**caractérisé en ce que**
l'angle entre le premier segment partiel (50) et le second segment partiel (52) est un angle essentiellement droit.

5. Système de réglage d'amortissement (2) conforme à l'une des revendications 3 et 4,
**caractérisé en ce que**
le premier segment partiel (50) et/ou le second segment partiel (52) comporte(nt) une zone partielle (54) ayant un diamètre diminué, le diamètre dans la zone partielle (54) de préférence situé entre 0,2 mm et 0,3 mm.

6. Système de réglage d'amortissement (2) conforme à l'une des revendications précédentes,
**caractérisé en ce que**
le boîtier externe (10) entoure par une liaison par la forme au moins une partie de la paroi latérale externe (44) du tube de guidage (12).

7. Système de réglage d'amortissement (2) conforme à l'une des revendications 3 à 5,
**caractérisé en ce que**
le second segment partiel (52) s'étend au travers de l'élément de fond (18) essentiellement perpendiculairement à l'axe de déplacement (4) de l'induit (14).

8. Système de réglage d'amortissement (2) conforme à l'une des revendications précédentes,
**caractérisé en ce que**
le perçage de ventilation (30) s'étend au travers du boîtier externe (10) essentiellement perpendiculairement à l'axe de déplacement (4).

9. Système de réglage d'amortissement (2) conforme à l'une des revendications précédentes,
**caractérisé en ce que**
le joint d'étanchéité (32) est un joint d'étanchéité torique ou un joint d'étanchéité annulaire en X.

10. Système de réglage d'amortissement (2) conforme à l'une des revendications précédentes,
**caractérisé en ce que**
le boîtier externe (10) comporte une ouverture de réception (28) tubulaire du tube de guidage (12) en direction de l'axe de déplacement (4), dont la surface interne (16) comporte une surface partielle (48) plane sur laquelle est formée l'ouverture (56) du second segment (38) orientée vers le tube de guidage (12).

11. Système de guidage d'amortissement (2) conforme à l'une des revendications précédentes,
**caractérisé en ce que**
le joint d'étanchéité (32) est logé dans une rainure annulaire (46), située sur le boîtier externe (10) et/ou sur le tube de guidage (12) autour du perçage de ventilation (30).

12. Système de réglage d'amortissement (2) conforme à l'une des revendications précédentes,
**caractérisé en ce que**
le tube de guidage (12) est un tube polaire et la ou les bobine(s) magnétique(s) (22) est(sont) enroulées de préférence autour du tube de guidage (12).

13. Système de réglage d'amortissement (2) conforme à l'une des revendications précédentes,
**caractérisé en ce que**
l'induit (14) comporte un ressort de rappel (62) qui s'appuie dans le tube de guidage (12) de préférence sur une surface (20) située à l'opposé de l'élément de fond (18) délimitant le volume interne (16).

14. Système de réglage d'amortissement (2) conforme à l'une des revendications précédentes,
**caractérisé en ce que**
le volume interne (24) est rempli par un fluide d'amortissement liquide (8), de préférence une huile d'amortissement.

15. Amortisseur de vibrations (2) comprenant un tube d'amortissement (6) ainsi qu'un dispositif de soupape d'amortissement réalisé sous la forme d'un système de réglage d'amortissement (2) conforme à l'une des revendications précédentes,
**caractérisé en ce que**
le volume externe (24) est délimité par le tube d'amortissement (6) réalisé de préférence sous la forme d'un cylindre externe, et le boîtier externe (10) s'étend dans le tube d'amortissement (6) en étant mobile en va-et-vient axialement le long de l'axe de déplacement (4).
